# EUROPÄISCHE PATENTSCHRIFT

(11) **EP 2 089 946 B1**
(45) Veröffentlichungstag und Bekanntmachung des Hinweises auf die Patenterteilung: **24.09.2014**
(21) Anmeldenummer: 07817419.0
(22) Anmeldetag: 09.08.2007
(51) Int. Cl.: H02G 3/00, E04H 15/32

(54) **ELEKTROMONTAGE- UND ANSCHLUSSEINRICHTUNG, ELEKTROKABEL UND MONTAGEVERFAHREN FÜR EINE ZELTKONSTRUKTION**
ELECTRICAL ASSEMBLY AND CONNECTION DEVICE, ELECTRIC CABLE, AND ASSEMBLY METHOD FOR A TENT STRUCTURE
DISPOSITIF DE MONTAGE ÉLECTRIQUE ET DE RACCORDEMENT, CÂBLE ÉLECTRIQUE ET PROCÉDÉ DE MONTAGE POUR UNE TENTE

(30) Priorität: 09.11.2006 DE 102006053174
(43) Veröffentlichungstag der Anmeldung: 19.08.2009
(73) Patentinhaber: Flux Veranstaltungstechnik GmbH & Co. KG, 74078 Heilbronn (DE)
(72) Erfinder: Werwitzke, Dieter, 74199 Untergruppenbach (DE)
(74) Vertreter: Clemens, Gerhard
(86) Internationale Anmeldenummer: PCT/DE2007/001417
(87) Internationale Veröffentlichungsnummer: WO 2008/055453

(56) Entgegenhaltungen:
- DE-A1- 2 844 152
- DE-A1- 3 620 619
- DE-U1- 29 722 740

## Beschreibung

### TECHNISCHES GEBIET

Die vorliegende Erfindung betrifft ein Montageverfahren für eine Zeltkonstruktion mit aus Riegeln und Stielen bestehenden Bindern, Dachpfetten und Zeltplanen, wobei die Binder am Boden liegend aus Riegeln und Stielen montiert werden, danach in einem vorgegebenen Abstand aufgestellt werden, die Dachpfetten auf den Riegeln montiert werden und die Zeltplanen in die Binder eingezogen werden, wobei die Elektroverkabelung mit zumindest einem Anschluss für zumindest einen elektrischen Verbraucher an die noch am Boden liegenden Riegeln und/oder Stielen und/oder Dachpfetten angeschlossen wird. Des Weiteren betrifft die Erfindung auch ein Elektrokabel zur Montage in einer an Tragelementen einer an Tragelementen einer Zeltkonstruktion vorhandenen Nut. Die Erfindung betrifft weiterhin eine Elektromontage- und Anschlusseinrichtung und auch ein Elektrokabel für den Anschluss von elektrischen Verbrauchern innerhalb einer Zeltkonstruktion mit Tragelementen, wie Riegel, Stiele und Dachpfetten, wobei die Tragelemente zumindest eine hinterschnitte Nut aufweisen mit einem Elektrokabel, einer ersten Anschlusseinrichtung mit einer ersten Anschlusseinheit für ein ankommendes Kabel und/oder eine zweite Anschlusseinheit für ein abgehendes Kabel und einer mit der ersten Anschlusseinrichtung elektrisch verbundenen zweiten Anschlusseinrichtung mit zumindest einer dritten Anschlusseinheit für zumindest einen elektrischen Verbraucher, wobei die erste Anschlusseinrichtung so ausgebildet ist, dass sie in die hinterschnittene Nut gemeinsam mit dem Elektrokabel einführbar ist und die zweite Anschlusseinrichtung bei eingeführter erster Anschlusseinrichtung außerhalb der Nut vorhanden ist. Die Erfindung betrifft auch einen Kondenswasserstreifen zum Anordnen unterhalb eines Riegels einer Zeltkonstruktion und darüber hinaus die Zeltkonstruktion selbst.

### STAND DER TECHNIK

Bei der Montage von Zelten wird die Zeltkonstruktion direkt am Bauort auf dem Boden zusammengesteckt und verschraubt. Die Binder bestehen dabei aus Riegeln und Stielen. Nach dem Verschrauben von Stiel und Riegel werden die Binder in vorgegebenen Abständen ausgerichtet, die Dachpfetten angeschlossen und die Konstruktion ausgesteift. Die Abstände der Binder sind von Hersteller zu Hersteller und je nach Position unterschiedlich. Schließlich werden im nächsten Arbeitsgang die Zeltplanen aufgezogen. Danach wird im Zelt mit dem Innenausbau (Elektroverdrahtung, Beleuchtung) begonnen. Bei der Montage der Kabelzuführung für die Elektroverkabelungen muss der Monteur mit der Leiter oder einem Rollgerüst arbeiten. Die Kabel werden an den Längsstreben (Dachpfetten) mit Kabelbindern verlegt. Dieser Vorgang ist sehr arbeitsintensiv und benötigt ca. 40 % der Zeit für die Elektromontage.

Des Weiteren ist bekannt, unterhalb von Riegeln sogenannte Kondenswasserstreifen abzuhängen, die dazu dienen, entstandene Feuchtigkeit nach links und rechts zur Traufe abzuleiten. Diese Kondenswasserstreifen werden bei den meisten Zeltkonstruktion von Spannweiten von 25 m (Meter) bis 50 m (Meter) eingesetzt. Diese müssen vom Montagemeister ein- und wieder ausgebaut werden.

In dem Dokument DE 297 22 740 U1 ist eine Witterungs-Schutzeinrichtung mit einer über ein Gestänge gespannten, aus textilem oder folienartigem Material bestehende Bespannung, wie Garten-Schirme oder -Pavilllons, Sonnen-Markisen etc. offenbart, die sich dadurch auszeichnet, dass in das Gestänge der Schutzeinrichtung wenigstens eine den unterhalb der Bespannung liegenden Bereich ausleuchtende, an eine elektrische Spannungsquelle anschließbare Leuchte mit jeweils wenigstens einer elektrischen Lampe integriert ist. Die Spannungsversorgung der Leuchte wird hierbei durch eine in einer tragenden rohrartigen Mittelstütze geführte Leitung gewährleistet.

In der DE 36 20 619 A1 ist ein Bausatz für Messestände offenbart, bei dem Fachwerkstäbe eingesetzt werden, die an jedem ihrer beiden Enden Verbindungselemente aufweist zur Kopplung der Fachwerkstäbe. Dabei kommen Fachwerkstäbe zum Einsatz, die außenumfangsseitig nach außen offene Nuten aufweisen, in denen Leitungen für den elektrischen Anschluss von Leuchtungselementen verlegt sind.

Die DE 28 44 152 A1 offenbart eine Raumumhüllung mit gespannter Membran, die eine Tragkonstruktion besitzt mit einer Vielzahl von in Querrichtung verlaufenden, in Längsrichtung im Abstand angeordneten, bogenförmigen Rahmenteilen. Diese Konstruktion wird durch Ausbildung von in Querrichtung verlaufenden Bindern, die mit Querverbindungsstäben untereinandern verbunden sind, erstellt.

### DARSTELLUNG DER ERFINDUNG

Ausgehend von dem genannten Stand der Technik liegt der vorliegenden Erfindung die Aufgabe beziehungsweise das technische Problem zugrunde, ein Montageverfahren für eine Zeltkonstruktion anzugeben, das wirtschaftlich eingesetzt werden kann und zu einer deutlichen Reduzierung des Arbeitsaufwands bei der Elektroinstallation führt. Der Erfindung liegt weiterhin die Aufgabe beziehungsweise das technische Problem zugrunde, eine Elektromontage- und Anschlusseinrichtung und ein Elektrokabel zur Verfügung zu stellen, die/das im Rahmen des genannten Verfahrens besonders wirtschaftlich eingesetzt werden kann, einfach handhabbar ist und eine schnelle Elektromontage gewährleistet. Der Erfindung liegt weiterhin die Aufgabe beziehungsweise das technische Problem zugrunde, ein Kondenswasserstreifen anzugeben, der geeignet ist, den Aufwand für die Elektromontage deutlich zu reduzieren.

Das erfindungsgemäße Montageverfahren ist durch die Merkmale des unabhängigen Anspruchs 1 gegeben. Vorteilhafte Ausgestaltungen und Weiterbildungen sind Gegenstand von dem unabhängigen Anspruch 1 direkt oder indirekt abhängigen Ansprüche.

Das erfindungsgemäße Montageverfahren für eine Zeltkonstruktion der eingangs genannten Art zeichnet sich dadurch aus, dass der beziehungsweise die elektrischen Verbraucher an den/die Anschluss/ Anschlüsse der Elektroverkabelung bei noch am Boden liegenden Riegeln, Stielen oder Dachpfetten angeschlossen wird/werden und die Riegel der Zeltkonstruktionen herstellungsbedingt in vielen Fällen nicht benötigte hinterschnitte Nute aufweisen, ist es hinsichtlich einer schnellen, zuverlässigen und funktionsfähigen Installation besonders vorteilhaft, die Elektroverkabelung mit Anschlüssen für elektrische Verbraucher in diese, an den Riegeln, den Stielen oder den Dachpfetten vorhandenen hinterschnittenen Nuten einzuziehen, wobei die elektrischen Anschlüsse außerhalb der Nut vorhanden sind. Bevorzugt wird in den meisten Fällen die Elektroverkabelung in der jeweiligen Nut eines Riegels eingezogen.

In einer vorteilhaften alternativen Ausgestaltung, bei der ein Kondenswasserstreifen eingesetzt wird, zeichnet sich das erfindungsgemäße Verfahren dadurch aus, dass an die noch am Boden liegenden Riegeln der Zeltkonstruktion unterseitig ein Kondenswasserstreifen eingezogen wird, der die Elektroverkabelung mit zumindest einem Anschluss für zumindest einem elektrischen Verbraucher aufweist.

Ein erfindungsgemäßes Elektrokabel zur Montage einer Nut ist durch die Merkmale des unabhängigen Anspruchs 3 gegeben. Vorteilhafte Ausgestaltungen und Weiterbildungen des erfindungsgemäßen Elektrokabels sind Gegenstand von dem unabhängigen Anspruch 3 direkt oder indirekt abhängigen Ansprüche.

Das erfindungsgemäße Elektrokabel weist eine erste Kabelanschlusseinrichtung und eine zweite Kabelanschlusseinrichtung jeweils gegenüberliegend im Endbereich auf, und ist dadurch gekennzeichnet, dass im Bereich vor der ersten und zweiten Kabelanschlusseinrichtung das Kabel einen Formbereich mit zumindest einer Querschnittsabmessung aufweist, die geringer ist als die Nutöffnungsbreite und im übrigen Kabelbereich eine Querschnittsabmessung aufweist, die größer ist als die Nutöffnungsbreite und die Kabelanschlusseinrichtung in eine Position seitlich versetzt zur gestreckten Längsrichtung des Kabels bringbar beziehungsweise vorhanden sind.

Das Elektrokabel kann problemlos in die Nut eingezogen werden, wobei die Kabelanschlusseinrichtungen außerhalb der Nut vorhanden sind. Es können problemlos mehrere hintereinander geschaltete Elektrokabel vorhanden sein. Bei Bedarf kann zwischen einer ankommenden zweiten Kabelanschlusseinrichtung und einer abgehenden ersten Kabelanschlusseinrichtung eine dritte Kabelanschlusseinrichtung dazwischen geschaltet sein, die den Anschluss eines elektrischen Verbrauchers ermöglicht.

Eine besonders bevorzugte Ausgestaltung des erfindungsgemäßen Elektrokabels zeichnet sich dadurch aus, dass die erste Kabelanschlusseinrichtung als Stecker und die zweite Kabelanschlusseinrichtung als Buchse ausgebildet ist.

Eine konstruktiv besonders einfache Ausgestaltung, die einfachste Anschlussmöglichkeiten und eine zuverlässige Isolierung gewährleistet, zeichnet sich dadurch aus, dass der Formbereich ein Formteil aufweist, dass die Adern des Elektrokabels isolierend umgibt, wobei das Formteil gemäß einer besonders vorteilhaften Weiterbildung als Schrumpfschlauch ausgebildet ist.

Eine hinsichtlich ihrer Herstellung besonders vorteilhafte und wirtschaftliche Ausgestaltung des erfindungsgemäßen Elektrokabels zeichnet sich dadurch aus, dass das Elektrokabel als genormtes Elektrokabel mit isolierender Umhüllung ausgebildet ist, wobei im Formbereich die Umhüllung entfernt ist, durch einen Schrumpfschlauch ersetzt ist und die Adern im Formbereich parallel ausgerichtet und im übrigen verdrallt vorhanden sind.

Die erfindungsgemäße Elektromontage- und Anschlusseinrichtung für den Anschluss von elektrischen Verbrauchern innerhalb einer Zeltkonstruktion ist durch die Merkmale des unabhängigen Anspruchs 8 gegeben. Vorteilhafte Ausgestaltungen und Weiterbildungen der erfindungsgemäßen Elektromontage-und Anschlusseinrichtung sind Gegenstand der von dem unabhängigen Anspruch 8 direkt oder indirekt abhängigen Ansprüche.

Die erfindungsgemäße Elektromontage- und Anschlusseinrichtung ist demgemäß dadurch gekennzeichnet, dass der zumindest eine elektrische Verbraucher über ein Kabel oder direkt an der dritten Anschlusseinheit angeschlossen ist, eine Halteeinrichtung mit einer Klemm- oder Klammereinheit mit zumindest einem elektrischen Verbraucher mit einer vierten Anschlusseinheit vorhanden ist, die mit der dritten Anschlusseinheit der zweiten Anschlusseinrichtung elektrisch leitend verbunden ist, wobei die Klemm- oder Klammereinheit innerhalb der Nut angeordnet ist und die erste Anschlusseinrichtung eine beabstandet zur ersten Anschlusseinheit angeordnete zweite Anschlusseinheit aufweist, wobei beide Anschlusseinheiten mechanisch miteinander gekoppelt sind.

So können auch übliche Klammereinheiten, die in die Nuten eingesetzt werden und die einen Beleuchtungskörper tragen, eingesetzt werden.

Die mechanische Kopplung der beiden Anschlusseinheiten kann beispielsweise durch ein Schleppseil gebildet werden.

Eine besonders bevorzugte Weiterbildung zeichnet sich dadurch aus, dass die erste Anschlusseinrichtung als Gleitelement ausgebildet ist, dessen Außenumfangskontur geringfügig kleiner ist als die Innenumfangskontur der hinterschnittenen Nut. Als Material für die Elektromontage- und Anschlusseinrichtung, insbesondere für die erste Anschlusseinrichtung und/oder zweite Anschlusseinrichtung kommt beispielsweise Kunststoff in Betracht.

Eine besonders einfache Ausgestaltung, die eine einfache und schnelle Handhabung gewährleistet zeichnet sich dadurch aus, dass die erste Anschlusseinrichtung über einen Steg mit einer zweiten Anschlusseinrichtung verbunden ist.

Im Traufbereich befindet sich bei den Riegeln und bei den Stielen auf der Innenseite herstellungsbedingt eine genormte Öffnung an der hinterschnittenen Nut. Durch diese Öffnung kann die erfindungsgemäße Elektromontage- und Anschlusseinrichtung problemlos eingeführt werden und das Kabel anschließend in die Nut eingezogen werden. Durch die spezielle Ausgestaltung der erfindungsgemäßen Elektromontage- und Anschlusseinrichtung beziehungsweise des erfindungsgemäßen Elektrokabels kann das Elektrokabel an der gewünschten Stellen, an denen ein elektrischer Verbraucher, beispielsweise Lampe, benötigt wird, von der ersten Anschlusseinrichtung über den Steg zu der zweiten Anschlusseinrichtung nach außen geführt werden beziehungsweise sind die Kabelanschlusseinrichtungen außerhalb der Nut vorhanden, so dass entweder ein elektrischer Verbraucher angeschlossen werden kann oder im Bedarfsfall das Elektrokabel durch ein weiteres Elektrokabel verlängert werden kann. An der zweiten Anschlusseinrichtung sitzt je nach Bedarf eine Buchse oder ein handelsüblicher Steckverbinder, an denen der elektrische Verbraucher in einfacher Art und Weise angeschlossen werden kann. Diese Elektromontage und der Anschluss des Verbrauchers erfolgt bereits bevor der Binder aufgestellt wird, das heißt so lange sich noch die Bauteile Riegel und Stütze am Boden liegend befinden. Dadurch kann auf den Einsatz von Leitern und Rollgerüsten - wie bisher üblich - vollständig verzichtet werden. Dies hat eine enorme Zeitersparnis bei der Elektroinstallation zur Folge. Darüber hinaus wird die Unfallgefahr deutlich vermindert, da die Montagepersonen nicht in großer Höhe arbeiten müssen. Ein weiterer besonderer Vorteil besteht darin, dass die Kabelführung für die Elektromontage außer an den Ein- und Auslasstellen nicht sichtbar ist, was einerseits optisch vorteilhaft ist und andererseits ein Schutz gegen Beschädigung darstellt.

In einer alternativen Ausgestaltung, die ebenfalls eine enorme Zeitersparnis bei der Elektromontage für Zeltkonstruktionen mit sich bringt, ist durch ein Kondenswasserstreifen zum Anordnen unterhalb eines Riegels einer Zeltkonstruktion gegeben, der sich dadurch auszeichnet, dass der Kondenswasserstreifen eine Elektroverkabelung mit zumindest einer Anschlusseinheit für zumindest einen elektrischen Verbraucher aufweist. Dadurch, dass die Elektroverkabelung mit der jeweiligen Anschlusseinheit direkt an den Kondenswasserstreifen vorhanden ist, kann auch dieser an dem am Boden liegenden Riegel problemlos angeschlossen werden, so dass eine Elektroinstallation mit Leitern oder Gerüsten ebenfalls vollständig entfalten kann.

Bevorzugt ist die Elektroverkabelung fest mit dem Kondenswasserstreifen verbunden. Dabei können in Längsrichtung rasterförmige angeordnete, insbesondere aufgeschweißte oder aufgeklebte Laschen vorhanden sein, die die Elektroverkabelung mit dem Kondenswasserstreifen verbinden.

Eine bevorzugte Ausgestaltung des erfindungsgemäßen Kondenswasserstreifens zeichnet sich dadurch aus, dass in zumindest einem Längsrandbereich in einem vorgegebenen Raster angeordnete Ausnehmungen, insbesondere Langlöcher, vorhanden sind, durch die hindurch die Elektroverkabelung von außen hin zu einer Anschlusseinheit führbar ist.

Bevorzugt ist die Elektroverkabelung oberseitig auf dem Kondenswasserstreifen vorhanden.

Eine erfindungsgemäße Zeltkonstruktion mit Tragelementen, insbesondere Riegeln, Stielen und/oder Pfetten zeichnet sich dadurch aus, dass eine Elektromontage- und Anschlusseinrichtung der oben genannten Art montiert ist. Alternativ kann eine bevorzugte Ausgestaltung einer erfindungsgemäßen Zeltkonstruktion mit einem unterhalb der Riegel jeweils angeordneten Kondenswasserstreifen aufweisen, an dem die Elektroverkabelung mit Anschlusseinheiten angeordnet ist.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Perspektivdarstellung einer Zeltkonstruktion mit einer an Riegeln und Stielen angeordneten Elektromontage- und Anschlusseinrichtung für elektrische Verbraucher,
- Fig. 2: schematischer Querschnitt durch einen Riegel der Konstruktion gemäß Fig. 1,
- Fig. 3: schematische Detailseitenansicht der Zeltkonstruktion gemäß Fig. 1 im Traufbereich,
- Fig. 4: schematische Detaildraufsicht einer in eine hinterschnittene Nut eines Riegels eingeführte Elektromontage- und Anschlusseinrichtung mit einer außenseitig vorhandenen Anschlusseinheit,
- Fig. 5: schematische Detaildraufsicht einer in eine hinterschnittene Nut eines Riegels eingeführte Elektromontage- und Anschlusseinrichtung mit einer außenseitig vorhandenen Beleuchtungseinheit,
- Fig. 6: schematischer Schnitt durch ein Ausführungsbeispiel einer Elektromontage- und Anschlusseinrichtung im in die Nut eines Riegels eingezogenen Zustand,
- Fig. 7: schematische Draufsicht auf die Elektromontage- und Anschlusseinrichtung gemäß Fig. 6,
- Fig. 8a: schematischer Querschnitt durch einen Riegel mit hinterschnittener Nut mit in die Nut eingesetzte Halteeinrichtung für ein Leuchtmittel,
- Fig. 8b: vergrößerte Darstellung des Halteelements gemäß Fig. 8a,
- Fig. 9: schematische Detailperspektive eines Riegels mit in die hinterschnittene Nut eingeführte Elektromontage- und Anschlusseinrichtung und Halteeinrichtung,
- Fig. 10: schematischer Querschnitt durch einen Riegel mit hinterschnittenen Nuten mit einem unterseitig angeordneten Kondenswasserstreifen mit Elektroinstallation,
- Fig. 11: schematische Draufsicht auf den Kondenswasserstreifen gemäß Fig. 10 mit Verlauf des Elektrokabels und einer Anschlusseinheit,
- Fig. 12: schematische Draufsicht auf eine in eine Nut eines Riegels eingeführte Elektromontage- und Anschlusseinrichtung, bei der zwei über ein Schleppseil gekoppelte Anschlusseinheiten für das Elektrokabel in die Nut eingeführt sind,
- Fig. 13: schematische Perspektivdarstellung der Elektromontage-und Anschlusseinrichtung gemäß Fig. 12 im in die Nut eines Riegels eingeführten Zustands,
- Fig. 14: schematische Detailseitenansicht eines Tragelements einer Zeltkonstruktion mit einer Nut, in die ein Elektrokabel mit seitlich nach außen versetzt angeordnete Kabelanschlusseinrichtungen eingezogen ist,
- Fig. 15: schematischer Längsschnitt (in einer Draufsicht gesehen) durch die Nut des Tragelements gemäß Fig. 14,
- Fig. 16: schematischer Schnitt durch das Tragelement gemäß Fig. 15 entlang Schnittführung A-A,
- Fig. 17: schematische Detailperspektive eines Tragelements einer Zeltkonstruktion mit Nut, in der mehrere Elektrokabel gemäß Fig. 14 eingezogen sind und miteinander verbunden sind, wobei zwischen zwei benachbarten Elektrokabel eine Anschlusseinrichtung für einen elektrischen Verbraucher zwischengeschaltet ist und
- Fig. 18a bis d: schematische Detailschnittdarstellung betreffend die Herstellung des Formbereiches bei dem Elektrokabel gemäß Fig. 14 mit verminderten Querschnittsabmessungen bei gleichzeitig seitlichem Versatz der Kabelanschlusseinrichtung.

### WEGE ZUM AUSFÜHREN DER ERFINDUNG

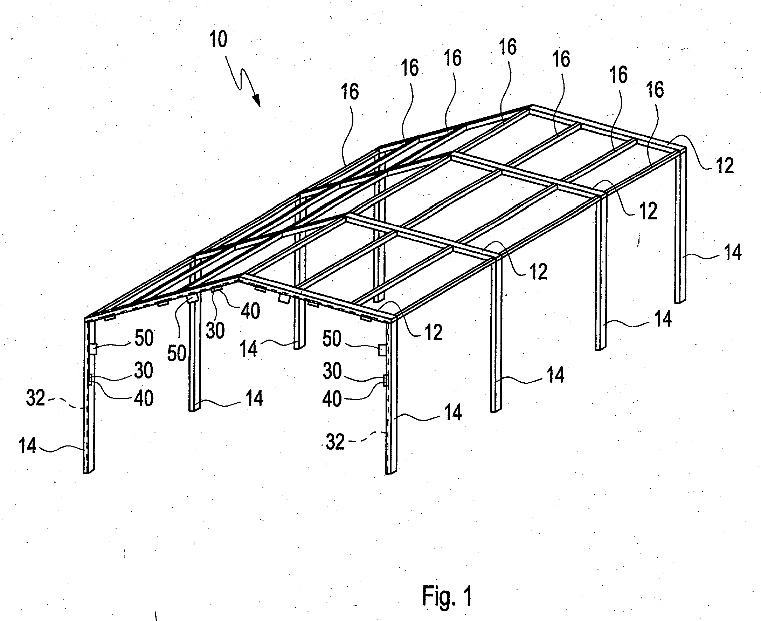

In Fig. 1 ist eine Zeltkonstruktion 10 in einer Perspektive ausschnittsweise dargestellt, die parallel angeordnete Binder aufweist, die durch Riegel 12 und Stiele 14 gebildet werden. Oberseitig sind auf den Riegeln 12 beabstandet in Längsrichtung verlaufende Pfetten 16 angeordnet.

An dem in Fig. 1 vorderen Binder sind schematisiert dargestellte Elektromontage-und Anschlusseinrichtungen 30 vorhanden, die mit einem Elektrokabel 32 miteinander leitend verbunden sind.

Das Elektrokabel 32 mit den Elektromontage- und Anschlusseinrichtungen 30 und auch gegebenenfalls zusätzlich vorhandene Halteeinrichtungen 50 für elektrische Verbraucher (zum Beispiel Leuchtmittel) werden an die Stiele 14 beziehungsweise die Riegel 12 angeschlossen, so lange diese noch auf dem Boden liegend vorhanden sind, das heißt die Elektromontage wird bodenseitig in einfacher Art und Weise durchgeführt, so dass die seither üblichen Elektromontagearbeiten mittels Leitern und Rollgerüsten an der aufgestellten Zeltkonstruktion entfallen können. Diese Montageverfahren bringt eine enorme Zeitersparnis mit sich, was sich insgesamt günstig auf die wirtschaftliche Montage von Zeltkonstruktionen auswirkt.

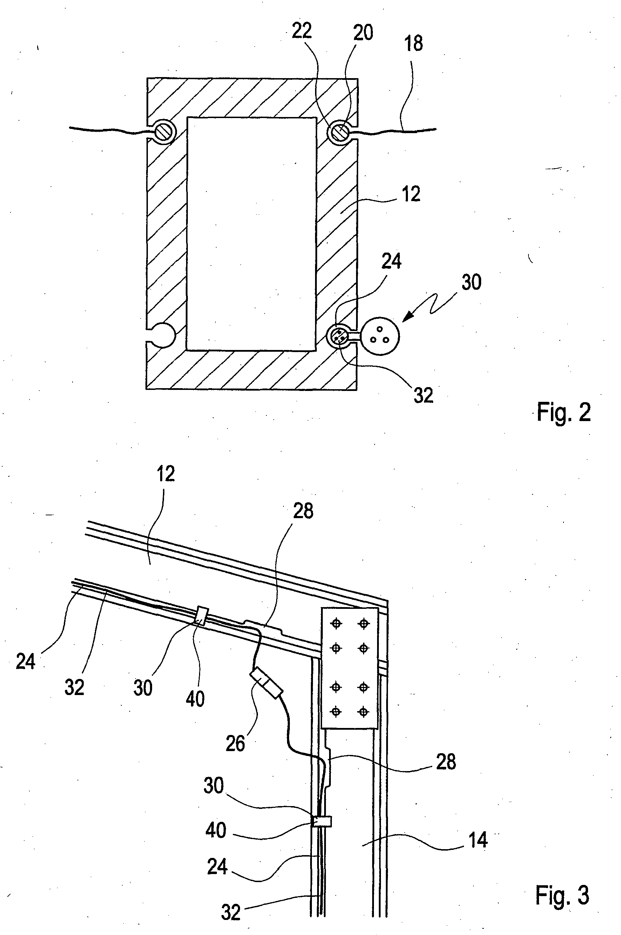

In Fig. 2 ist ein Querschnitt durch einen Riegel 12 dargestellt, wobei der Riegel 12 beispielsweise als Aluminiumstrangpresshohlprofil ausgebildet ist, dessen hohlkammerförmige Ausbildung in Fig. 2 nicht näher dargestellt ist. Im oberen Randbereich besitzt der Riegel 12 auf beiden Seiten eine hinterschnittene obere Nut 22 und im unteren Bereich ebenfalls auf beiden Seiten eine hinterschnittene untere Nut 24.

An beide obere Nute 22 ist jeweils über einen Keder 20 eine Zeltplane 18 angeschlossen.

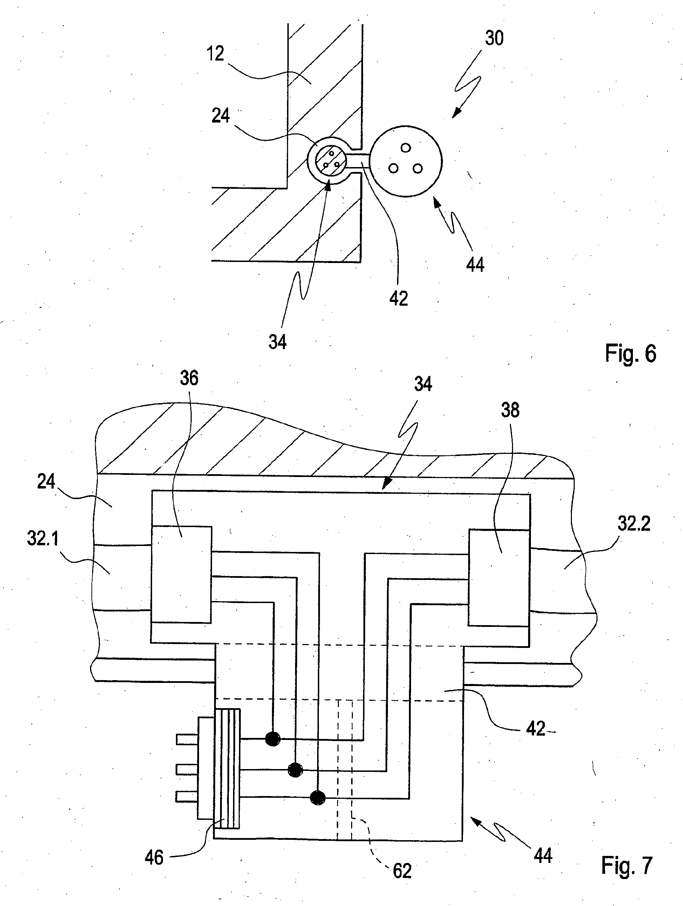

In der in Fig. 2 rechten unteren Nut 24 ist ein erstes Ausführungsbeispiel einer Elektromontage- und Anschlusseinrichtung 30 mit Kabel 32 angeschlossen, die in einem konstruktiven Ausführungsbeispiel in den Fig. 6 und 7 näher dargestellt ist.

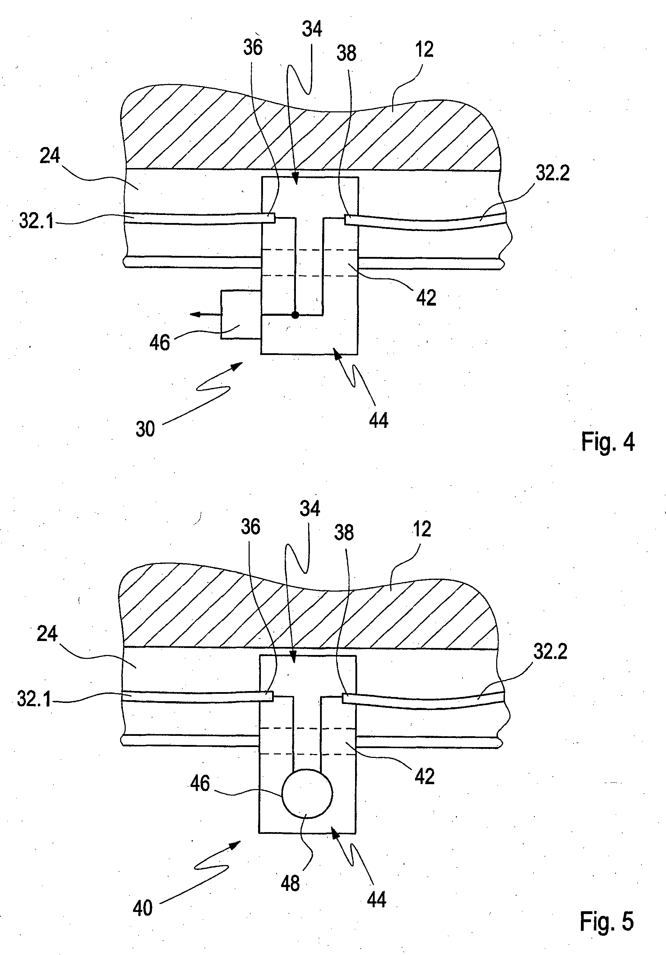

Gemäß Fig. 4 weist die Elektromontage- und Anschlusseinrichtung 30 eine erste Anschlusseinrichtung 34 auf, die innerhalb der hinterschnittenen Nut 24 angeordnet ist. Die erste Anschlusseinrichtung 34 besitzt eine erste Anschlusseinheit 36 für ein ankommendes Kabel 32.1 und eine zweite Anschlusseinheit 38 für ein abgehendes Kabel 32.2. An die erste Anschlusseinrichtung 34 ist ein Steg 42 angeformt, der nach außen führt und an den außerhalb eine zweite Anschlusseinrichtung 44 angeformt ist. Die zweite Anschlusseinrichtung 44 besitzt eine dritte Anschlusseinheit 46, die elektrisch leitend mit dem ankommenden beziehungsweise abgehenden Kabel 32.1, 32.2 verbunden ist.

Die Elektromontage- und Anschlusseinrichtung 30 wird gemäß Fig. 3 über an dem Riegel 12 beziehungsweise der Stütze 14 vorhandene Öffnungen 28 der Nut 24 eingeführt. Mit der Elektromontage- und Anschlusseinrichtung 30 ist es somit problemlos möglich, in die hinterschnittene Nut 24 ein Elektrokabel 32 einzuziehen, wobei an den jeweils gewünschten Stellen eine dritte Anschlusseinheit 48 für einen elektrischen Verbraucher zur Verfügung gestellt werden kann.

In Fig. 5 ist eine weitere Variante einer Elektromontage- und Anschlusseinrichtung 40 dargestellt, die sich von der Anschlusseinrichtung 30 gemäß Fig. 4 dadurch unterscheidet, dass an die dritte Anschlusseinheit 46 direkt ein elektrischer Verbraucher 48 (Leuchtmittel) angeschlossen ist.

Bei der Elektromontage- und Anschlusseinrichtung 30 gemäß Fig. 4 wird der elektrische Verbraucher über ein separates Kabel angeschlossen.

Die Verbindung zwischen den am Riegel 12 und an der Stütze 14 vorhandenen Elektromontage- und Anschlusseinrichtung mit Kabel 32 erfolgt wie beispielsweise in Fig. 3 dargestellt über eine übliche Elektrosteckverbindung 26.

Wie in den Fig. 6 und 7 dargestellt werden von der ersten Anschlusseinheit 36 und der zweiten Anschlusseinheit 38 der ersten Anschlusseinrichtung 34 die einzelnen Drähte des Kabels 32 nach außen zu der zweiten Anschlusseinrichtung 44 und dann zur dritten Anschlusseinheit 46 geführt, die im dargestellten Ausführungsbeispiel als Buchse ausgebildet ist. Damit steht außerhalb der Nut 24 im unmittelbaren Bereich der Riegelunterseite ein Elektroanschluss zur Verfügung, der praktisch an jeder beliebigen Position in Längsrichtung des Riegels positioniert werden kann. Die erste Anschlusseinrichtung 34 ist hierbei insbesondere als Gleitelement ausgebildet, das heißt, dass der Außenumfang der ersten Anschlusseinrichtung 36 mit Steg 42 geringfügig kleiner ist als die Innenumfangskontur der hinterschnittenen Nut 24. Dadurch kann mittels der Elektromontage- und Anschlusseinrichtung 30 beziehungsweise 40 problemlos das Kabel 32 in die Nut 24 eingezogen werden

Unterseitig und/oder oberseitig kann an die zweite Anschlusseinrichtung 44 ein Steg 62 angeformt sein.

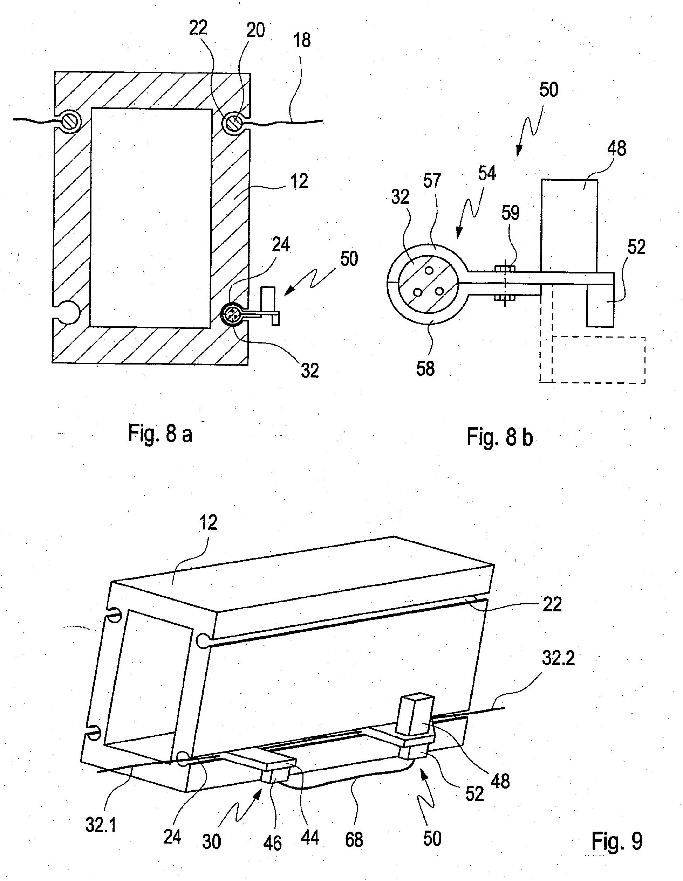

In der Fig. 8a ist der Querschnitt eines Riegels 12 dargestellt, der dem Querschnitt des Riegels gemäß Fig. 2 entspricht.

In der rechten unteren Nut 24 ist eine Halteeinrichtung 50 angeschlossen, die ein Leuchtmittel 48 und eine mit dem Leuchtmittel elektrisch leitend in Verbindung stehenden vierte Anschlusseinheit 52 aufweist. Die Halteeinrichtung 50 ist in Fig. 8b näher dargestellt. Die Halteeinrichtung 50 besitzt eine Klemmeinheit 54 mit einer oberen Klemmplatte 57 und einer unteren Klemmplatte 58. Beide Klemmplatten sind im Bereich der Nut 24 teilkreisförmig ausgebildet, so dass sie das in die Nut 24 eingezogene Elektrokabel 32 umfassen. Die nach außen weisende Stege der oberen Klemmplatte 57 und unteren Klemmplatte 58 sind über Klemmschrauben 59 miteinander verklemmt.

Die untere Klemmplatte 58 kann in ihrem nach außen weisenden Bereich einen nach unten weisenden L-förmigen Querschnitt besitzen, was in Fig. 8b gestrichelt dargestellt ist.

Die Halteeinrichtung 50 kann über eine in Fig. 8b nicht dargestelltes Klemmelement, wie beispielsweise eine Klemmschraube, an dem Riegel arretiert werden, wodurch die mechanische Beanspruchung auf das Kabel 32 reduziert wird.

Durch die Halteeinrichtung 50 ist es möglich, an beliebiger Stelle in Längsrichtung des Riegels 12 innerhalb der Nut 24 eine Befestigung für ein Leuchtmittel vorzusehen, wobei dieses Leuchtmittel über die vierte Anschlusseinheit 52 und einem zusätzlichen Kabel 68 mit der dritten Anschlusseinheit 46 der Elektromontage- und Anschlusseinrichtung 30 elektrisch leitend in Verbindung steht, was in Fig. 9 in einer Perspektive schematisch dargestellt ist.

Die Halteeinrichtung 50 kann somit problemlos, trotz des innerhalb der Nut 24 verlaufenden Kabels 32 angeschlossen werden.

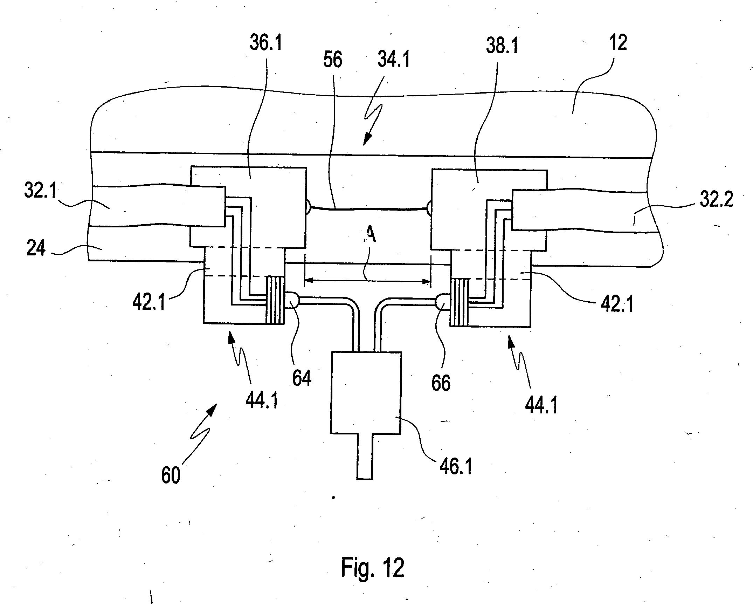

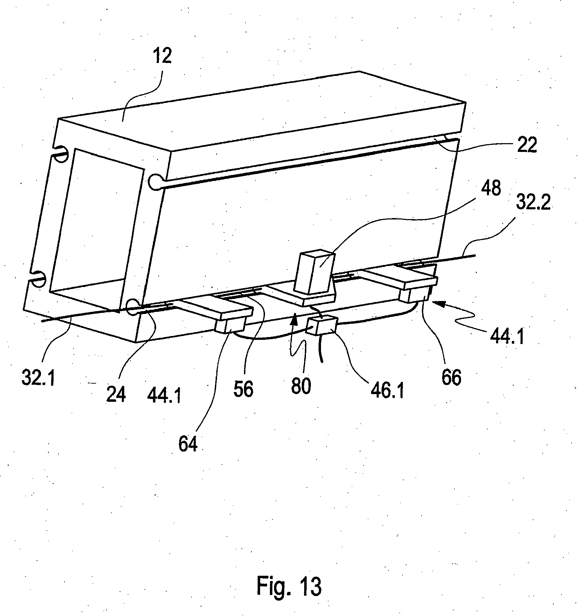

In den Fig. 12 und 13 ist ein drittes Ausführungsbeispiel einer Elektromontage-und Anschlusseinrichtung 60 dargestellt, das sich von der Einrichtung 30 gemäß Fig. 6 und 7 dadurch unterscheidet, dass die erste Anschlusseinrichtung 34.1 in zwei getrennte Bauelemente gegliedert ist, die jeweils die erste Anschlusseinheit 36.1 und die zweite Anschlusseinheit 38.1 aufweisen. Die beiden Bauteile der ersten Anschlusseinrichtung 34.1 sind im Ausführungsbeispiel durch ein Schleppseil 56 miteinander gekoppelt. Sowohl das ankommende Kabel 32.1 als auch das abgehende Kabel 36.1 sind über den Steg 42.1 zur zweiten Anschlusseinrichtung 44.1 nach außen geführt bis hin zu einer fünften beziehungsweise sechsten Anschlusseinheit 64, 66. Die fünfte Anschlusseinheit 64 und die sechste Anschlusseinheit 66 sind über ein Kabel an die dritte Anschlusseinheit 46.1 angeschlossen.

Durch die Auftrennung der ersten Anschlusseinrichtung 34.1 in zwei Bauelemente steht zwischen den beiden Bauelementen ein Bereich (Bezugszeichen A in Fig. 12) zur Verfügung, in dem kein Elektrokabel 32 verläuft. Daher kann in diesem Bereich ein Klammerelement 80 in der Nut eingeschlossen werden, das ein Leuchtmittel 48 aufweist und mit der dritten Anschlusseinheit 46.1 elektrisch leitend in Verbinddung steht, was in Fig. 13 schematisch in einer Perspektive dargestellt ist.

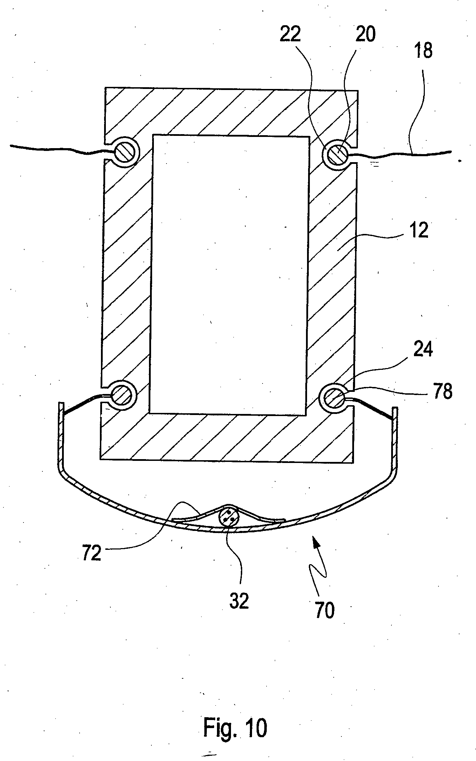

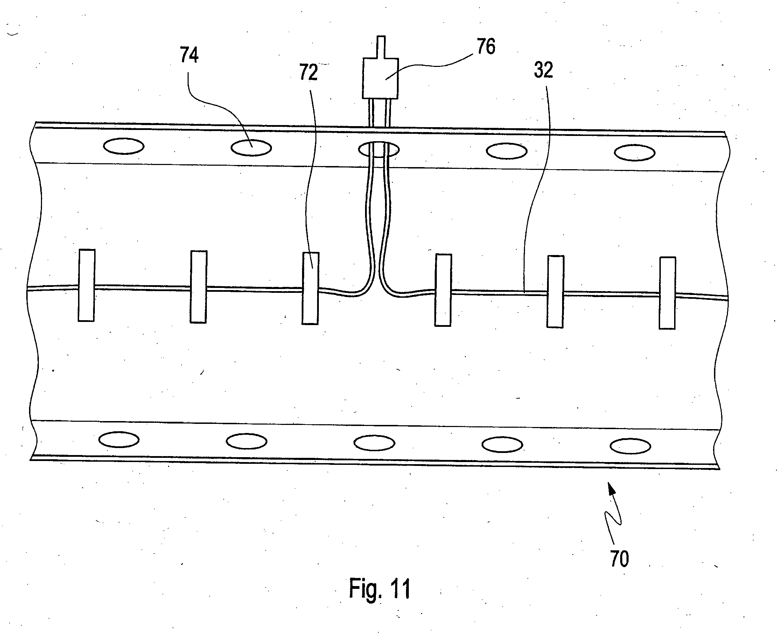

In den Fig. 10 und 11 ist eine weitere Variante einer erfindungsgemäßen Elektroinstallation dargestellt. An dem Riegel 12 ist unterseitig ein Kondenswasserstreifen 70 angeschlossen, wobei der Anschluss des Kondenswasserstreifens an den Riegel 12 jeweils über einen Keder 78 mit Fahne erfolgt, der in der unteren Nut 24 jeweils eingeschoben vorhanden ist. Oberseitig ist auf den Kondenswasserstreifen 70 ein Elektrokabel 32 verlegt, das mittels in Längsrichtung rasterförmig beabstandet angeordnete, im Ausführungsbeispiel aufgeschweißte Laschen 72 fixiert wird.

Auf beiden Längsseitenränder weist der Kondenswasserstreifen 70 rasterförmig beabstandet Langlöcher 72 auf, so dass an der jeweils gewünschten Stelle das Elektrokabel 32 nach außen geführt werden kann zu einer siebten Anschlusseinheit 76, an die dann ein elektrischer Verbraucher angeschlossen werden kann.

Hinsichtlich der Montage des Kondenswasserstreifens 70 mit dem Elektrokabel 32 und der siebten Anschlusseinheit 76 beziehungsweise den siebten Anschlusseinheiten 76 ist es ebenfalls so, dass der Kondenswasserstreifen 70 an den jeweiligen noch am Boden befindlichen Riegel angeschlossen wird, so dass aufwendige Elektroinstallationsarbeiten auf Leitern oder Gerüsten entfallen können.

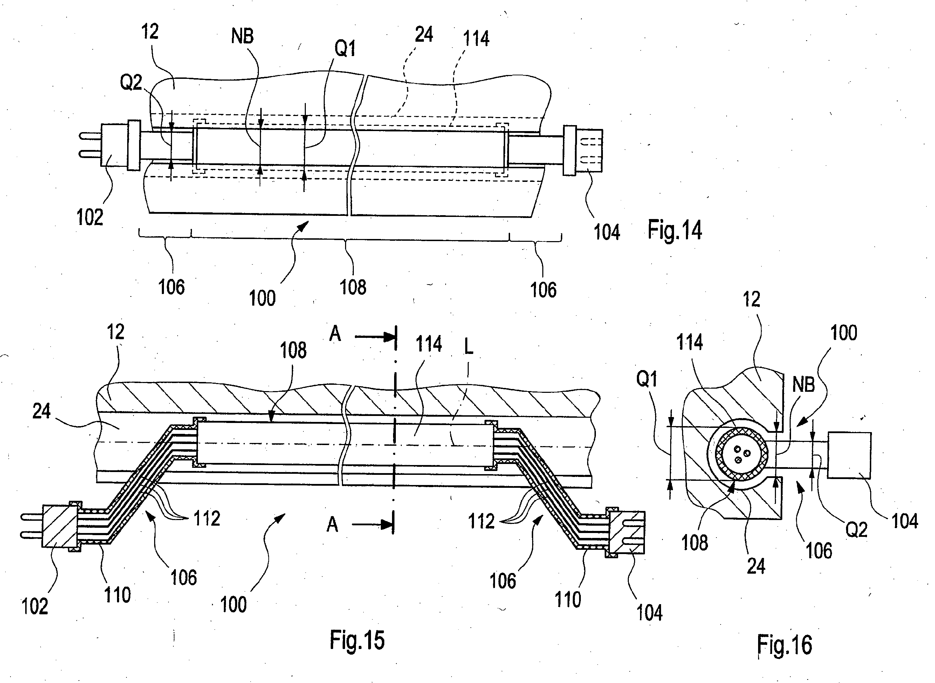

Die Fig. 14, 15 und 16 zeigen einen Ausschnitt eines Binders 12 einer Zeltkonstruktion, in dessen Nut 24 ein Elektrokabel 100 eingezogen ist. Das Elektrokabel 100 weist in seinem in Fig. 14 linken Endbereich eine erste Kabelanschlusseinrichtung 102 auf, die als Stecker ausgebildet ist, und in seinem in Fig. 14 rechten Endbereich eine zweite Kabelanschlusseinrichtung 104 auf, die als Buchse ausgebildet ist.

Im unmittelbaren Bereich vor der ersten Kabelanschlusseinrichtung 102 beziehungsweise der zweiten Kabelanschlusseinrichtung 104 ist ein Formbereich 106 vorhanden, der von einem Schrumpfschlauch 110 umgeben ist, wobei gleichzeitig die im übrigen Bereich vorhandene isolierende Umhüllung 114 im Formbereich 106 entfernt ist. Der von der Umhüllung 114 umgebene übrige Kabelbereich 108 weist eine Querschnittsabmessung Q1 auf, die größer ist als die Nutbreite NB der Nut 24. Dadurch ist das Elektrokabel 100 in dem in die Nut 24 eingezogenen Zustand gegen Herausfallen gesichert. Der Formbereich 106 mit dem Schrumpfschlauch 110 ist dabei so gestaltet, dass die Adern 112 des Elektrokabels 100 nach außen zu der ersten Kabelanschlusseinrichtung 102 beziehungsweise zweiten Kabelanschlusseinrichtung 104 geführt sind. Der Formbereich 106 weist hierbei eine Querschnittsdicke Q2 auf, die geringer ist als die Nutöffnungsbreite NB der Nut 24. Dadurch kann der Formbereich 106 aus der Nut 24 nach außen geführt werden, so dass die erste Kabelanschlusseinrichtung 102 und die zweite Kabelanschlusseinrichtung 104 seitlich versetzt zur gestreckten Längsrichtung L des Elektrokabels 100 außerhalb der Nut 24 vorhanden sind.

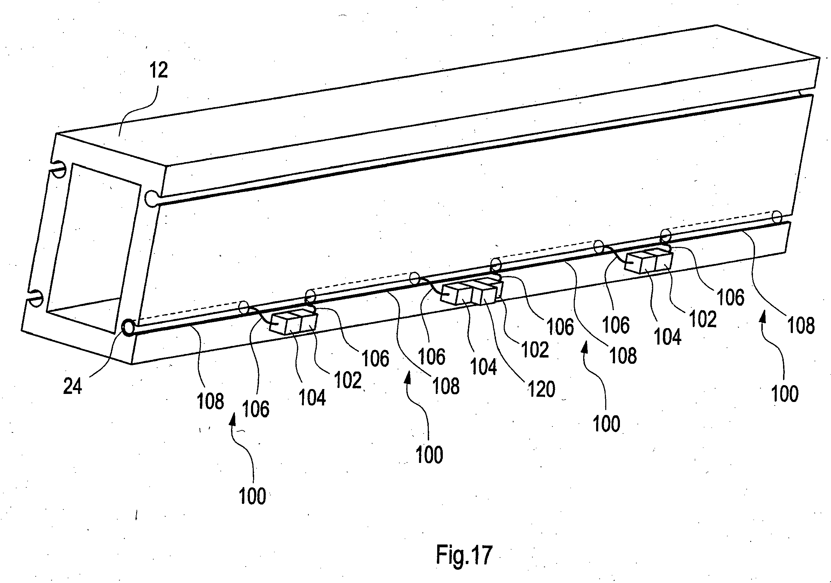

Das Elektrokabel 100 wird bevorzugt in einer standardisierten Länge hergestellt. Ist nun die Nut 24 länger als ein Elektrokabel 100 können problemlos mehrere Elektrokabel 100 hintereinander geschaltet werden, was in Fig. 17 schematisch dargestellt ist. Das Elektrokabel 100 fungiert hier jeweils als Verlängerüngskabel, das jeweils problemlos über die erste Kabelanschlusseinrichtung 102 beziehungsweise die zweite Kabelanschlusseinrichtung 104 hintereinander gekoppelt werden kann. Ist an einer Stelle das Anordnen eines elektrischen Verbrauchers erforderlich, so wird, wie in Fig. 17 dargestellt, in einfacher Art und Weise zwischen einer ankommenden zweiten Kabelanschlusseinrichtung 104 und einer abgehenden ersten Kabelanschlusseinrichtung 102 eine dritte Kabelanschlusseinrichtung 120 zwischengeschaltet, die einen Anschluss für den elektrischen Verbraucher beinhaltet.

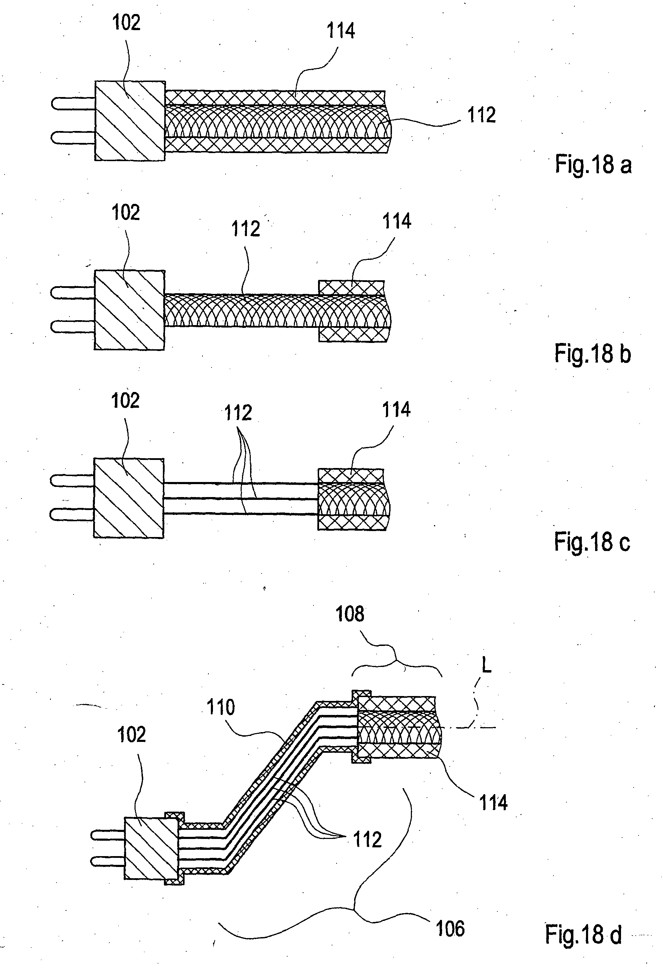

In den Fig. 18a bis d ist schematisch dargestellt wie der Formbereich 106 in einfacher Art und Weise hergestellt werden kann. Ausgehend von einem Standardelektrokabel mit einer die verdrallten Adern 112 umgebenen Umhüllung 114 zwischen den Kabelanschlusseinrichtungen 102 beziehungsweise 104 (in Fig. 18 nicht dargestellt) wird im Bereich vor der ersten Kabelanschlusseinrichtung 102 die Umhüllung entfernt (Fig. 18b). Dann werden die im Ausführungsbeispiel drei Adern 112 gerade ausgerichtet (Fig. 18c).

Daran anschließend wird über den freigelegten Bereich ein Schrumpfschlauch 110 über die drei Adern 112 und ansatzweise über die Umhüllung 114 und die erste Kabelanschlusseinrichtung 102 gezogen und in eine in Fig. 18 nicht näher dargestellte Form eingelegt, die die Ausbildung des Formbereichs 106 in der in Fig. 18d dargestellten Geometrie ermöglicht. Dabei ist die erste Kabelanschlusseinrichtung 102 versetzt zur gestreckten Längsrichtung L des Kabels vorhanden. Anschließend wird der Schrumpfschlauch 110 erhitzt, so dass er sich der Umfangskontur der drei parallelen Adern 112 anschmiegt und eine relativ steife Festigkeit erreicht. Dadurch, dass die drei Adern 112 parallel ausgerichtet sind und der Schrumpfschlauch 110 eine relativ geringe Dicke aufweist, besitzt das Elektrokabel 100 im Formbereich 106 in Dickenrichtung eine geringere Querschnittsabmessung als die Querschnittsabmessungen im Bereich der normalen Umhüllung 114. Die Querschnittsabmessungen im Bereich der normalen Umhüllung sind dabei so gewählt, dass sie größer sind als die Nutbreite NB (siehe Fig. 14) der Nut 24 des Binders 12. Die Querschnittsabmessungen im Formbereich 106 sind so gewählt, dass sie kleiner sind als die Nutbreite NB der Nut 24. Dadurch kann der Formbereich 106 von der Nut 24 ausgehend nach außen geführt werden, so dass die erste Kabelanschlusseinrichtung 102 außerhalb des Binders 12 vorhanden ist. Dasselbe gilt auch für die zweite Kabelanschlusseinrichtung 104.

Mit dem erfindungsgemäßen Elektrokabel 100 ist es problemlos möglich, eine Elektromontage an Zeltkonstruktionen durchzuführen, die schnell montiert und auch wieder schnell demontiert werden kann, wobei Anschlusseinrichtungen für elektrische Verbraucher praktisch an jeder gewünschten Stelle zur Verfügung gestellt werden können. Über eine an einem Binder vorhandene Öffnung können die Elektrokabel 100 problemlos eingezogen werden und durch den Anschluss weiterer Elektrokabel problemlos verlängert werden. Mit dem erfindungsgemäßen Elektrokabel kann insgesamt die Montagezeit für eine Elektroverkabelung eines Zeltes deutlich verringert werden.

## Patentansprüche

1. Montageverfahren für eine Zeltkonstruktion (10) mit aus Riegeln (12) und Stielen (14) bestehenden Bindern, Dachpfetten (16) und Zeltplanen (18), wobei die Binder am Boden liegend aus Riegeln (12) und Stielen (14) montiert werden, danach in einem vorgegebenen Abstand aufgestellt werden, die Dachpfetten (16) auf den Riegeln (12) montiert werden und die Zeltplanen an die Binder angeschlossen werden, wobei
- die Elektroverkabelung (32) mit zumindest einem Anschluss für zumindest einen elektrischen Verbraucher (48) an die noch am Boden liegenden Riegeln (12) und/oder Stielen (14) und/oder Dachpfetten (16) angeschlossen wird, wobei
der beziehungsweise die elektrischen Verbraucher an den/die Anschluss/ Anschlüsse der Elektroverkabelung bei noch am Boden liegenden Riegeln, Stielen oder Dachpfetten angeschlossen wird/werden
**dadurch gekennzeichnet dass**
die Elektroverkabelung (32) mit Anschlüssen für elektrische Verbraucher in an den Riegeln, den Stielen oder den Dachpfetten vorhandenen hinterschnittenen Nuten (24) eingezogen wird, wobei die elektrischen Anschlüsse außerhalb der Nut (24) vorhanden sind.

2. Montageverfahren nach Anspruch 1,
- **dadurch gekennzeichnet, dass**
- an die noch am Boden liegenden Riegeln (12) der Zeltkonstruktion (10) unterseitig ein Kondenswasserstreifen (70) angeschlossen wird, der die Elektroverkabelung (32) mit zumindest einem Anschluss für zumindest einem elektrischen Verbraucher (48) aufweist.

3. Elektrokabel (100) zur Montage in einer an Tragelementen einer Zeltkonstruktion vorhandenen Nut (24) mit einer Nutöffnungsbreite (NB) mit einer ersten Kabelanschlusseinrichtung (102) an einem Ende und einer zweiten Kabelanschlusseinrichtung (104) an dem gegenüberliegenden Ende,
- **dadurch gekennzeichnet, dass**
- im Bereich vor der ersten und zweiten Kabelanschlusseinrichtung (102, 104) das Kabel (100) einen Formbereich (106) mit zumindest einer Querschnittsabmessung (Q2) aufweist, die geringer ist als die Nutöffnungsbreite (NB) und im übrigen Kabelbereich eine Querschnittsabmessung (Q1) aufweist, die größer ist als die Nutöffnungsbreite (NB) und die Kabelanschlusseinrichtungen (102,104) in eine Position seitlich versetzt zur gestreckten Längsrichtung (L) des Kabels (100) bringbar beziehungsweise vorhanden sind.

4. Elektrokabel nach Anspruch 3,
- **dadurch gekennzeichnet, dass**
- die erste Kabelanschlusseinrichtung (102) als Stecker und die zweite Kabelanschlusseinrichtung (104) als Buchse ausgebildet sind.

5. Elektrokabel nach Anspruch 3 oder 4,
- **dadurch gekennzeichnet, dass**
- der Formbereich (106) ein Formteil aufweist, dass die Adern des Elektrokabels (100) isolierend umgibt.

6. Elektrokabel nach Anspruch 5,
- **dadurch gekennzeichnet, dass**
- das Formteil als steifer oder flexibler Schrumpfschlauch (110) ausgebildet ist.

7. Elektrokabel nach einem der Ansprüche 3 bis 6,
- **dadurch gekennzeichnet, dass**
- das Elektrokabel als genormtes Elektrokabel mit isolierender Umhüllung (114) ausgebildet ist, wobei im Formbereich (106) die Umhüllung (114) enfernt ist, durch einen Schrumpfschlauch (110) ersetzt ist und die Adern (112) des Elektrokabels im Formbereich (106) parallel ausgerichtet und im übrigen verdrallt vorhanden sind.

8. Elektromontage- und Anschlusseinrichtung (30; 40; 50) für den Anschluss von elektrischen Verbrauchern (48) innerhalb einer Zeltkonstruktion (10) mit Tragelementen, wie Riegel (12), Stiele (14) und Dachpfetten (16), wobei die Tragelemente zumindest eine hinterschnittene Nut (24) aufweisen, mit
- einem Elektrokabel (32),
- einer ersten Anschlusseinrichtung (34) mit einer ersten Anschlusseinheit (36) für ein ankommendes Kabel (32.1) und/oder eine zweite Anschlusseinheit (38) für ein abgehendes Kabel (32.2) und
- einer mit der ersten Anschlusseinrichtung (34) elektrisch verbundenen zweiten Anschlusseinrichtung (44) mit zumindest einer dritten Anschlusseinheit (46) für zumindest einen elektrischen Verbraucher (48),
- wobei die erste Anschlusseinrichtung (34) so ausgebildet ist, dass sie in die hinterschnittene Nut (24) gemeinsam mit dem Elektrokabel (32) einführbar ist und die zweite Anschlusseinrichtung (44) bei eingeführter erster Anschlusseinrichtung (34) außerhalb der Nut (24) vorhanden ist,
- **dadurch gekennzeichnet, dass**
- der zumindest eine elektrische Verbraucher (48) über ein Kabel oder direkt an der dritten Anschlusseinheit (46) angeschlossen ist,
- eine Halteeinrichtung (50) mit einer Klemm- oder Klammereinheit (54) mit zumindest einem elektrischen Verbraucher (48) mit einer vierten Anschlusseinheit (52) vorhanden ist, die mit der dritten Anschlusseinheit (46) der zweiten Anschlusseinrichtung (44) elektrisch leitend verbunden ist, wobei die Klemm- oder Klammereinheit (54) innerhalb der Nut (24) angeordnet ist, und
- die erste Anschlusseinrichtung (34.1) eine beabstandet zur ersten Anschlusseinheit (36) angeordnete zweite Anschlusseinheit (38) aufweist, wobei beide Anschlusseinheiten (36, 38) mechanisch miteinander gekoppelt sind.

9. Elektromontage- und Anschlusseinrichtung nach Anspruch 8,
- **dadurch gekennzeichnet, dass**
- die mechanische Kopplung der beiden Anschlusseinheiten (36, 38) durch ein Schleppseil (56) gebildet wird.

10. Elektromontage- und Anschlusseinrichtung nach einem oder mehreren der Ansprüche 8 oder 9,
- **dadurch gekennzeichnet, dass**
- die erste Anschlusseinrichtung (34) als Gleitelement ausgebildet ist, dessen Außenumfangskontur geringfügig kleiner ist als die Innenumfangskontur der hinterschnittenen Nut (24).

11. Elektromontage- und Anschlusseinrichtung nach Anspruch 10,
- **dadurch gekennzeichnet, dass**
- die erste Anschlusseinrichtung (34) und/oder die zweite Anschlusseinrichtung (44) aus Kunststoff besteht.

12. Elektromontage- und Anschlusseinrichtung nach einem oder mehreren der Ansprüche 8 bis 11,
- **dadurch gekennzeichnet, dass**
- die erste Anschlusseinrichtung (34) über einen Steg (42) mit der zweiten Anschlusseinrichtung (44) verbunden ist.

13. Kondenswasserstreifen (70) zum Anordnen unterhalb eines Riegels (12) einer Zeltkonstruktion,
- **dadurch gekennzeichnet, dass**
- der Kondenswasserstreifen (70) eine Elektroverkabelung (32) mit zumindest einer Anschlusseinheit (76) für zumindest einen elektrischen Verbraucher aufweist.

14. Kondenswasserstreifen nach Anspruch 13,
- **dadurch gekennzeichnet, dass**
- die Elektroverkabelung (32) fest mit dem Kondenswasserstreifen (70) verbunden ist.

15. Kondenswasserstreifen nach Anspruch 14,
- **dadurch gekennzeichnet, dass**
- die Elektroverkabelung (32) durch in Längsrichtung rasterförmig angeordnete, insbesondere aufgeschweißte oder aufgeklebte, Laschen (72) mit dem Kondenswasserstreifen (70) verbunden ist.

16. Kondenswasserstreifen nach einem oder mehreren der Ansprüche 13 bis 15,
- **dadurch gekennzeichnet, dass**
- in zumindest einem Längsrandbereich in einem vorgegebenen Raster angeordnete Ausnehmungen, insbesondere Langlöcher (74), vorhanden sind, durch die hindurch die Elektroverkabelung (32) nach außen hin zu einer Anschlusseinheit (76) führbar ist.

17. Kondenswasserstreifen nach einem oder mehreren der Ansprüche 13 bis 16,
- **dadurch gekennzeichnet, dass**
- die Elektroverkabelung (32) oberseitig auf dem Kondenswasserstreifen (70) angeordnet ist.

18. Zeltkonstruktion (10) mit Tragelementen, insbesondere Riegeln (12), Stielen (14) und Pfetten (16),
- **dadurch gekennzeichnet, dass**
- an zumindest einem der Tragelemente zumindest ein Elektrokabel nach einem oder mehreren der Ansprüche 3 bis 7 und/oder eine Elektromontage- und Anschlusseinrichtung (30; 40; 50) nach einem oder mehreren der Ansprüche 8 bis 12 vorhanden ist.

19. Zeltkonstruktion mit Tragelementen, wie Riegel, Stiele, Dachpfetten,
- **dadurch gekennzeichnet, dass**
- unterseitig an den Riegeln ein Kondenswasserstreifen (70) nach einem oder mehreren der Ansprüche 13 bis 17 angeordnet ist.

## Claims

1. Assembly method for a tent structure (10) having ties which comprise bars (12) and posts (14), having purlins (16) and having tarpaulins (18), wherein the ties are assembled from bars (12) and posts (14) lying on the ground, are then erected at a predefined distance, the purlins (16) are fitted onto the bars (12) and the tarpaulins are connected to the ties, wherein
- the electrical cabling arrangement (32) having at least one connection for at least one electrical load (48) is connected to the bars (12) and/or posts (14) and/or purlins (16) which are still lying on the ground, wherein the electrical load or electrical loads is/are connected to the connection/connections of the electrical cabling arrangement when bars, posts or purlins are still lying on the ground,
- **characterized in that** the electrical cabling arrangement (32) with connections for electrical loads is inserted into undercut grooves (24) which are present on the bars, the posts or the purlins, wherein the electrical connections are present outside the groove (24).

2. Assembly method according to Claim 1,
- **characterized in that**
- a condensation water strip (70) is connected to the bottom face of the bars (12) of the tent structure (10) which are still lying on the ground, the said condensation water strip comprising the electrical cabling arrangement (32) with at least one connection for at least one electrical load (48).

3. Electric cable (100) for assembly in a groove (24) which is present on supporting elements of a tent structure and has a groove opening width (NB) with a first cable connection device (102) at one end and a second cable connection device (104) at the opposite end,
- **characterized in that**
- in the region in front of the first and second cable connection device (102, 104), the cable (100) has a shaped region (106) with at least one cross-sectional dimension (Q2) which is smaller than the groove opening width (NB) and in the remaining cable region has a cross-sectional dimension (Q1) which is larger than the groove opening width (NB), and the cable connection devices (102, 104) can be moved to or are present in a position which is laterally offset in relation to the extended longitudinal direction (L) of the cable (100).

4. Electric cable according to Claim 3,
- **characterized in that**
- the first cable connection device (102) is in the form of a plug, and the second cable connection device (104) is in the form of a socket.

5. Electric cable according to Claim 3 or 4,
- **characterized in that**
- the shaped region (106) has a shaped part which surrounds the cores of the electric cable (100) in an insulating manner.

6. Electric cable according to Claim 5,
- **characterized in that**
- the shaped part is in the form of a stiff or flexible shrink sleeve (110).

7. Electric cable according to one of Claims 3 to 6,
- **characterized in that**
- the electric cable is in the form of a standard electric cable with an insulating sheath (114), wherein the sheath (114) is removed in the shaped region (106), replaced by a shrink sleeve (110), and the cores (112) of the electric cable are oriented in parallel in the shaped region (106) and are otherwise present in twisted form.

8. Electrical assembly and connection device (30; 40; 50) for the connection of electrical loads (48) within a tent structure (10) having supporting elements, such as bars (12), posts (14) and purlins (16), wherein the supporting elements have at least one undercut groove (24), comprising
- an electric cable (32),
- a first connection device (34) with a first connection unit (36) for an incoming cable (32.1) and/or a second connection unit (38) for an outgoing cable (32.2), and
- a second connection device (44) which is electrically connected to the first connection device (34) and has at least one third connection unit (46) for at least one electrical load (48),
- wherein the first connection device (34) is designed such that it can be inserted into the undercut groove (24) together with the electric cable (32), and the second connection device (44) is present outside the groove (24) when the first connection device (34) is inserted,
- **characterized in that**
- the at least one electrical load (48) is connected to the third connection unit (46) directly or by means of a cable,
- a retaining device (50) having a clamping or clip unit (54) with at least one electrical load (48) with a fourth connection unit (52) is present, said retaining device being electrically conductively connected to the third connection unit (46) of the second connection device (44), wherein the clamping or clip unit (54) is arranged within the groove (24), and
- the first connection device (34.1) has a second connection unit (38) which is arranged at a distance from the first connection unit (36), wherein the two connection units (36, 38) are mechanically coupled to one another.

9. Electrical assembly and connection device according to Claim 8,
- **characterized in that**
- the mechanical coupling of the two connection units (36, 38) is formed by a tow rope (56).

10. Electrical assembly and connection device according to one or both of Claims 8 and 9,
- **characterized in that**
- the first connection device (34) is in the form of a sliding element of which the outer circumferential contour is slightly smaller than the inner circumferential contour of the undercut groove (24).

11. Electrical assembly and connection device according to Claim 10,
- **characterized in that**
- the first connection device (34) and/or the second connection device (44) are composed of plastic.

12. Electrical assembly and connection device according to one or more of Claims 8 to 11,
- **characterized in that**
- the first connection device (34) is connected to the second connection device (44) by means of a web (42).

13. Condensation water strip (70) to be arranged below a bar (12) of a tent structure,
- **characterized in that**
- the condensation water strip (70) has an electrical cabling arrangement (32) with at least one connection unit (76) for at least one electrical load.

14. Condensation water strip according to Claim 13,
- **characterized in that**
- the electrical cabling arrangement (32) is fixedly connected to the condensation water strip (70).

15. Condensation water strip according to Claim 14,
- **characterized in that**
- the electrical cabling arrangement (32) is connected to the condensation water strip (70) by lugs (72) which are arranged, in particular welded or adhesively bonded, in the form of a grid in the longitudinal direction.

16. Condensation water strip according to one or more of Claims 13 to 15,
- **characterized in that**
- recesses, in particular elongate holes (74), which are arranged in a predefined grid are present in at least one longitudinal edge region, it being possible for the electrical cabling arrangement (32) to be routed through said recesses, towards the outside, to a connection unit (76).

17. Condensation water strip according to one or more of Claims 13 to 16,
- **characterized in that**
- the electrical cabling arrangement (32) is arranged on the top face of the condensation water strip (70).

18. Tent structure (10) having supporting elements, in particular bars (12), posts (14) and purlins (16),
- **characterized in that**
- at least one electric cable according to one or more of Claims 3 to 7 and/or an electrical assembly and connection device (30; 40; 50) according to one or more of Claims 8 to 12 is present on at least one of the supporting elements.

19. Tent structure having supporting elements, such as bars, posts, purlins,
- **characterized in that**
- a condensation water strip (70) according to one or more of Claims 13 to 17 is arranged on the bottom face of the bars.

## Revendications

1. Procédé de montage d'une structure de tente (10) comportant des fermes composées de traverses (12) et de montants (14), des pannes de toiture (16) et des toiles de tente (18), les fermes étant montées sur le sol à partir de traverses (12) et de montants (14) puis redressées à intervalle prédéfini, les pannes de toiture (16) étant montées sur les traverses (12) et les toiles de tente raccordées aux fermes,
- le câblage électrique (32) avec au moins un raccordement pour au moins un consommateur électrique (48), ledit câblage électrique (32), étant raccordé aux traverses (12) et/ou aux montants (14) et/ou aux pannes de toiture (16) encore étendus sur le sol,
le(s) consommateur(s) électrique(s) étant raccordé(s) au(x) raccordement(s) du câblage électrique alors que les traverses, montants ou pannes de toiture sont encore étendus sur le sol,
- **caractérisé en ce que**
- le câblage électrique (32) avec des raccordements pour consommateurs électriques est passé dans des rainures en contre-dépouille (24) présentes sur les traverses, les montants ou les pannes de toiture, les raccordements électriques étant présents à l'extérieur de la rainure (24).

2. Procédé de montage selon la revendication 1,
- **caractérisé en ce que**
- aux traverses (12) encore étendues sur le sol de la structure de tente (10) est raccordée du côté inférieur une lame d'eau de condensation (70) qui présente le câblage électrique (32) avec au moins un raccordement pour au moins un consommateur électrique (48).

3. Câble électrique (100) destiné à être monté dans une rainure (24) d'une largeur d'ouverture de rainure (NB) présente sur des éléments porteurs d'une structure de tente, qui comporte un premier dispositif de raccordement de câble (102) à une extrémité et un deuxième dispositif de raccordement de câble (104) à l'extrémité opposée,
- **caractérisé en ce que**
- dans la zone située avant le premier et le deuxième dispositif de raccordement de câble (102, 104), le câble (100) présente une zone profilée (106) d'au moins une dimension en section transversale (Q2) qui est plus petite que la largeur d'ouverture de rainure (NB) et dans la zone restante du câble une dimension en section transversale (Q1) qui est plus grande que la largeur d'ouverture de rainure (NB) et les dispositifs de raccordement de câble (102, 104) peuvent être amenés ou sont prévus dans une position décalée latéralement par rapport à l'extension longitudinale (L) du câble (100).

4. Câble électrique selon la revendication 3,
- **caractérisé en ce que**
- le premier dispositif de raccordement de câble (102) est réalisé sous la forme d'une fiche et le deuxième dispositif de raccordement de câble (104) sous la forme d'une prise femelle.

5. Câble électrique selon la revendication 3 ou 4,
- **caractérisé en ce que**
- la zone profilée (106) présente une partie profilée qui entoure les conducteurs du câble électrique (100) de manière isolante.

6. Câble électrique selon la revendication 5,
- **caractérisé en ce que**
- la partie profilée est réalisée sous la forme d'une gaine thermorétractable rigide ou souple (110).

7. Câble électrique selon l'une des revendications 3 à 6,
- **caractérisé en ce que**
- le câble électrique est réalisé sous la forme d'un câble électrique normalisé avec enveloppe isolante (114), l'enveloppe (114) étant retirée dans la zone profilée (106), remplacée par une gaine thermorétractable (110), et les conducteurs (112) du câble électrique étant orientés parallèlement dans la zone profilée (106) et torsadés par ailleurs.

8. Dispositif de montage et de raccordement électrique (30 ; 40 ; 50) pour le raccordement de consommateurs électriques (48) à l'intérieur d'une structure de tente (10) formée d'éléments porteurs tels que des traverses (12), des montants (14) et des pannes de toiture (16), les éléments porteurs présentant au moins une rainure en contre-dépouille (24), comprenant
- un câble électrique (32),
- un premier dispositif de raccordement (34) avec une première unité de raccordement (36) pour un câble d'arrivée (32.1) et/ou une deuxième unité de raccordement (38) pour un câble de départ (32.2) et
- un deuxième dispositif de raccordement (44) relié électriquement au premier dispositif de raccordement (34) et muni d'au moins une troisième unité de raccordement (46) pour au moins un consommateur électrique (48),
- le premier dispositif de raccordement (34) étant conçu de façon à pouvoir être introduit dans la rainure en contre-dépouille (24) en commun avec le câble électrique (32) et le deuxième dispositif de raccordement (44) étant présent à l'extérieur de la rainure (24) lorsque le dispositif de raccordement (34) est introduit,
- **caractérisé en ce que**
- ledit au moins un consommateur électrique (48) est raccordé à la troisième unité de raccordement (46) par l'intermédiaire d'un câble ou directement,
- un dispositif de retenue (50) avec une unité de serrage ou d'attache (54) avec au moins un consommateur électrique (48) muni d'une quatrième unité de raccordement (52) est présent, cette dernière étant reliée de manière électroconductrice à la troisième unité de raccordement (46) du deuxième dispositif de raccordement (44), l'unité de serrage ou d'attache (54) étant disposée à l'intérieur de la rainure (24), et
- le premier dispositif de raccordement (34.1) présente une deuxième unité de raccordement (38) disposée à distance de la première unité de raccordement (36), les deux unités de raccordement (36, 38) étant couplées entre elles mécaniquement.

9. Dispositif de montage et de raccordement électrique selon la revendication 8,
- **caractérisé en ce que**
- le couplage mécanique des deux unités de raccordement (36, 38) est formé par un câble d'entraînement (56).

10. Dispositif de montage et de raccordement électrique selon l'une ou plusieurs des revendications 8 ou 9,
- **caractérisé en ce que**
- le premier dispositif de raccordement (34) est réalisé sous la forme d'un élément coulissant dont le contour périphérique extérieur est légèrement plus petit que le contour périphérique intérieur de la rainure en contre-dépouille (24).

11. Dispositif de montage et de raccordement électrique selon la revendication 10,
- **caractérisé en ce que**
- le premier dispositif de raccordement (34) et/ou le deuxième dispositif de raccordement (44) sont réalisés en matière plastique.

12. Dispositif de montage et de raccordement électrique selon l'une ou plusieurs des revendications 8 à 11,
- **caractérisé en ce que**
- le premier dispositif de raccordement (34) est relié au deuxième dispositif de raccordement (44) par une entretoise (42).

13. Lame d'eau de condensation (70) destinée à être disposée au-dessous d'une traverse (12) d'une structure de tente,
- **caractérisée en ce que**
- la lame d'eau de condensation (70) présente un câblage électrique (32) avec au moins une unité de raccordement (76) pour au moins un consommateur électrique.

14. Lame d'eau de condensation selon la revendication 13,
- **caractérisée en ce que**
- le câblage électrique (32) est relié de manière fixe à la lame d'eau de condensation (70).

15. Lame d'eau de condensation selon la revendication 14,
- **caractérisée en ce que**
- le câblage électrique (32) est relié à la lame d'eau de condensation (70) par des languettes (72) disposées, en particulier soudées ou collées, à la manière d'une trame dans la direction longitudinale.

16. Lame d'eau de condensation selon l'une ou plusieurs des revendications 13 à 15,
- **caractérisée en ce que**
- des évidements, en particulier des trous oblongs (74) disposés selon une trame prédéfinie, sont présents dans au moins une zone de bord longitudinale, à travers lesquels le câblage électrique (32) peut être conduit vers l'extérieur et amené à une unité de raccordement (76).

17. Lame d'eau de condensation selon l'une ou plusieurs des revendications 13 à 16,
- **caractérisée en ce que**
- le câblage électrique (32) est disposé du côté supérieur de la lame d'eau de condensation (70).

18. Structure de tente (10) formée d'éléments porteurs, en particulier de traverses (12), de montants (14) et de pannes (16),
- **caractérisée en ce que**
- au moins un câble électrique selon l'une ou plusieurs des revendications 3 à 7 et/ou un dispositif de montage et de raccordement électrique (30 ; 40 ; 50) selon l'une ou plusieurs des revendications 8 à 12 est présent sur au moins un des éléments porteurs.

19. Structure de tente formée d'éléments porteurs tels que des traverses, des montants, des pannes de toiture,
- **caractérisée en ce que**
- une lame d'eau de condensation (70) selon l'une ou plusieurs des revendications 13 à 17 est disposée du côté inférieur des traverses.
